Europäisches Patentamt

European Patent Office

Office européen des brevets

(11) Publication number: **0 143 092**
**B1**

## (12) EUROPEAN PATENT SPECIFICATION

(45) Date of publication of patent specification: **07.01.87**

(21) Application number: **84850311.6**

(22) Date of filing: **19.10.84**

(51) Int. Cl.⁴: **B 65 G 59/06, B 65 G 57/26**

(54) **Method for depositing laths as spacers between layers of boards in connection with timber-stacking machinery, and a lath feed magazine for carrying out the method.**

(30) Priority: **20.10.83 NO 833830**

(43) Date of publication of application:
**29.05.85 Bulletin 85/22**

(45) Publication of the grant of the patent:
**07.01.87 Bulletin 87/02**

(84) Designated Contracting States:
**AT DE FR SE**

(56) References cited:
**DE-B-1 259 784**
**FR-A-2 184 746**
**SE-C- 102 427**
**US-A-3 643 621**
**US-A-4 271 980**

(73) Proprietor: **FLESSUM, John**
**Bergslia 20**
**N-3260 O. Halsen (NO)**

(72) Inventor: **FLESSUM, John**
**Bergslia 20**
**N-3260 O. Halsen (NO)**

(74) Representative: **Lenz, Franz et al**
**AWAPATENT AB Box 5117**
**S-200 71 Malmö (SE)**

Courier Press, Leamington Spa, England.

## Description

The present invention relates to a method of depositing laths as spacers between layers of unseasoned timber as recited in the preamble of the appurtenant independent method claim 1, and an embodiment of a lath feed magazine for carrying out the method, as recited in the preamble of the succeeding apparatus claim 2.

Such method and apparatus, respectively, are known from SE—C—102427.

The drawback of the prior art methods and apparatus is their sensitivity to laths of nonuniform dimensions, crookedness, etc., which may cause one or more of the laths to become jammed in the magazine rather than being deposited on the stack of boards. As a result, it is often necessary to improve the quality of the laths prior to use by planing then off to uniform dimensions, an extra work operation which is not commensurate with the function of the laths. In the apparatus of the above patent specification, moreover, transferring devices must be utilized for guiding the laths from the magazine into contact with the layer of boards, which complicates these apparatus and methods.

The object of the present invention is to provide a method and an apparatus for carrying out the method which is simple and reliable and is also insensitive to discrepancies in the quality of the laths used as spacers.

This is obtained according to the invention by the features recited in the characterizing clause of the appurtenant method claim 1. The lath magazine is lowered into contact with the layer of boards, the releasable retaining means is released and the entire stack of laths drops down onto the layer of boards, after which the releasable retaining means is activated for retention of the next-to-the-bottom lath in the stack at a distance corresponding to one lath thickness from the bottom edge of the magazine, before the magazine is again elevated, leaving the bottom lath resting in the correct position on the layer of boards.

With this method, there is no possibility that the lath can become incorrectly positioned as it is being deposited on the layer of boards, and variations in the thickness, width, degree of straightness, etc. of the laths have very little influence on the reliability of the depositing apparatus.

The method is executed by means of the apparatus whose characterizing features are recited in the apparatus claim 2 and the succeeding claims. The lath feed magazine is adapted to be raised and lowered, and the releasable retaining means comprises a power-driven body at one side of the magazine for exerting pressure against one side edge of the bottom lath in the magazine for holding the lath against the opposite side wall of the magazine at a distance of one lath thickness from the bottom edge of the magazine, which edge comes into contact with the layer of boards when the magazine is lowered.

An embodiment of the invention will be described in greater detail in the following with reference to the accompanying drawings, wherein:

Figure 1 shows a lath feed magazine in side view in the elevated position above a stack of boards, and the dotted lines indicate the position of the magazine when it has been lowered into contact against the upper layer of boards in the stack of timber.

Figure 2 shows the magazine in end view, transversely of the board stack, and

Figures 3—6 schematically illustrate the steps by which a lath is deposited on a layer of boards.

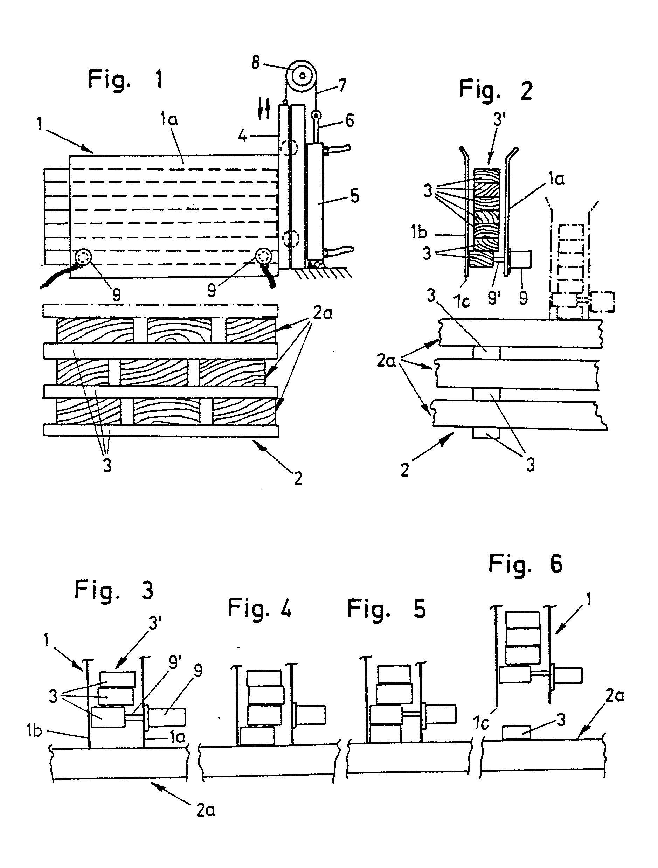

Figure 1 shows a lath feed magazine 1 which is adapted to be raised and lowered. The drawing shows the magazine in side view and in the elevated position above an upper layer of boards 2a in a stack of timber 2 which is being assembled by timber-stacking machinery. Laths 3 are placed as spacers between the layers 2a in the board stack, disposed transversely of the boards.

The lath magazine 1 is adapted to be raised and lowered by means of a conventional guide means 4 (not described in further detail in this specification), driven by a pressure cylinder 5 whose piston 6 is connected to a wire 7 passing over a pulley 8 and fastened to the part of the guide that is connected to the lath magazine 1.

The lath magazine 1 comprises two side walls 1a, 1b whose distance apart is greater than the width of the laths, so that any crooked lath may easily pass down between the side walls, 1a, 1b without becoming wedged between the walls. At the lower part of the side wall 1a, two pressure cylinders 9 are provided, spaced apart from each other and positioned a distance above the bottom edge 1c of the magazine corresponding to one lath thickness. The pressure cylinders 9 are attached to the side wall 1a in such manner that their pistons are urged forward into the magazine upon activation until they come in contact with a lath 3 within the magazine, pressing the lath 3 against the opposite wall 1b of the magazine and thereby also supporting the overlying laths 3 in the magazine, as shown in Figure 2. If the magazine is empty, the cylinder pistons will extend somewhat farther into the magazine, and in that position they will serve as a bottom wall of the magazine for supporting a new supply of laths.

In Figures 1 and 2 the dotted lines indicate the position of the magazine 1 when it has been lowered into contact against an upper layer 2a of boards in the stack 2. In this position, the retaining means (the pressure cylinder 9) is released, and the stack of laths 3' falls down onto the upper layer 2a of boards. This is also shown in Figures 3 and 4, where Figure 3 shows the pressure cylinder 9 in the activated position in which it is pressing a lath 3 against the opposite side wall 1b of the magazine, thereby retaining the stack of laths 3' in position. In Figure 4, the pressure cylinder 9 has been drawn back and the stack of laths 3' has dropped down onto the board layer 2a. Figure 5 shows the pressure cylinder again in the activated position, in which is presses the lath 3 immediately above the bottom lath against the side wall 1b of the magazine, thereby also supporting the overlying stack 3' of laths, and Figure 6 shows the magazine 1 and lath stack 3' in the elevated position with one lath 3 left behind in the correct position on the layer of boards 2a.

A new layer 2a of planks or boards can then be formed on top of the spacer lath in a manner known per se, whereafter the magazine 1 is once again lowered for depositing a new spacer lath 3.

As seen clearly in Figures 2 and 3—6, the distance between the side walls 1a, 1b of the magazine 1 is considerably larger than the width of the laths 3, so that despite any dimensional irregularities or nonuniformities of any kind, the laths can slide down freely between the walls of the magazine when the cylinder piston 9 is withdrawn. The free end of the piston rod preferably has a tapered or pointed configuration so that it preferably comes into contact with the center portion of one side edge of the lath. This ensures that even if the thickness of the laths varies considerably, the piston rod will abut against the side edge of the lath 3 and retain it (together with the overlying stack 3') within the magazine 1.

As seen in Figure 1, two pressure cylinders are provided at the lower part of the magazine 1. In an alternative embodiment, one pressure cylinder 9 can be arranged at the middle section of said lower part of the magazine. The piston rod of the cylinder must in that case be provided with a clamping bar (not shown) extending parallel with the side edge of the lath 3, and the clamping bar upon activation of the cylinder will come into contact against a longer expanse of the side edge of the lath, thereby pressing the lath 3 against the opposite side wall 1b of the magazine 1 and retaining it there.

For filling a new supply of spacer laths 3 into an empty magazine 1, elevated into the upraised position, the pressure cylinders 9 must be activated such that the piston rods project transversely into the magazine 1 to form a support for the first lath 3 that is filled into the magazine, which supports overlying laths 3 in the stack 3'. After the magazine has been lowered into contact against the upper layer 2a of the board stack 2, the piston is withdrawn, allowing the bottom lath 3 to fall down onto the boards 2a as discussed above, after which the piston is re-activated to bring it in contact with the next lath 3 in the stack, immediately above the lath that has been deposited on the boards, before the magazine 1 is again elevated as discussed above.

The retaining means 9, which in the above-described embodiment constitute pressure cylinders, may take various other forms, and the invention is not restricted to the exemplary embodiment illustrated in this specification.

## Claims

1. A method for depositing laths (3) by means of at least one feed magazine (1) within which the laths are stacked one on top of the next and transversely supported, used in connection with timber stacking machinery wherein the laths (3) are deposited as spacers on each layer (2a) of boards before the next board layer (2a) is formed, and wherein the bottom lath (3) of the stack within the magazine is retained by means of a releasable retaining means (9) at a distance from the bottom edge (1c) of the magazine (1), characterized in that the magazine (1) is lowered to rest against the layer of boards (2a) and the releasable retaining means (9) is released, thereby permitting the entire stack (3') of laths to drop down onto the layer (2a), after which the releasable retaining means (9) is activated for retaining the next-to-the-bottom lath (3) of the stack (3') at a distance corresponding to one lath thickness from said lower edge (1c) of the magazine (1), before the magazine (1) is elevated, leaving the bottom lath (3) behind in the correct position on the layer of boards (2a).

2. A feed magazine apparatus for use in connection with timber-stacking machinery for carrying out the method recited in claim 1, and comprising at least two feed magazines (1) for depositing laths (3) as spacers on a layer (2a) of boards prior to the formation of the next board layer, wherein laths (3) that are stacked one on top of the next and transversely supported as a stack (3') within the magazine (1) are retained by releasable retaining means (9), characterized in that the magazine (1) is adapted to be raised and lowered, and that the releasable retaining means comprises a power-driven body (9') at one side wall (1a) of the magazine (1) for exerting pressure contact against the side edge of the bottom lath (3) in the stack, for holding said lath against the opposite side wall (1b) of the magazine (1) at a distance from the bottom edge (1c) of the magazine resting on the layer (2a) corresponding to one lath thickness.

3. An apparatus according to claim 2, characterized in that the body (9') preferably constitutes the piston rod of a pressure cylinder (9) which is movable in a direction perpendicular to the side wall (1a) of the magazine (1).

4. An apparatus according to claim 3, characterized in that the part (9') of the releasable retaining means (9) that lies against the side edge of the lath (3) is provided with at least one sharp projection.

5. An apparatus according to claim 3, characterized in that the pressure cylinder (9) is connected to a clamping bar extending parallel with the side edge of the lath (3) for exerting retaining pressure against said side edge.

## Patentansprüche

1. Verfahren zum Absetzen von Latten (3) mittels wenigstens eines Zuführmagazins (1), in welchem die Latten übereinander gestapelt und quer abgestützt sind, welche Latten in Verbindung mit Bretters tapelmaschinen verwendet werden, wo die Latten (3) als Abstandshalter auf jeder Bretterlage (2) abgelegt werden, bevor die nächste Bretterlage (2a) ausgebildet wird, und wobei die unterste Latte (3) des Stapels innerhalb des Magazins mit Hilfe einer lösbaren Halteeinrichtung (9) in einem Abstand von der Unterkante (1c) des Magazins (1) gehalten wird, dadurch gekennzeichnet, daß das Magazin (1) abgesenkt wird, um auf der Bretterlage (2) aufzusitzen und die lösbare Halteeinrichtung (9) gelöst wird, um es zu ermöglichen, daß der gesamte Lattenstapel (3') nach unten auf die Lage (2a) fällt, wonach die lösbare Halteeinrichtung (9) aktiviert wird, um die der untersten Latte (3) nachfolgende des Stapels (3') in einer Distanz entsprechend einer Lattendicke von der Unterkante (1c) des Magazins (1) zu halten, bevor das Magazin (1) angehoben wird, die unterste Latte (3) in korrekter Position auf der Bretterlage (2a) zurücklassend.

2. Zuführmagazinvorrichtung zur Verwendung in Verbindung mit einer Bretter stapelmaschine zur Ausführung des Verfahrens nach Anspruch 1, enthaltend wenigstens zwei Zuführmagazine (1) zum Absetzen von Latten (3) als Abstandshalter auf einer Bretterlage (2a) vor der Ausbildung der nächsten Bretterlage, wobei Latten (3) die übereinander gestapelt und quer abgestützt als ein Stapel (3') innerhalb des Magazins (1) durch eine lösbare Halteeinrichtung (9) gehalten werden, dadurch gekennzeichnet, daß das Magazin (1) dazu eingerichtet ist, angehoben und abgesenkt zu werden, und daß die lösbare Halteeinrichtung einen kraftbetriebenen Körper (9') an einer Seitenwand (1a) des Magazins (1) aufweist, um eine Druckberührung gegen die Seitenkante der untersten Latte (3) im Stapel auszuüben, um die Latte gegen die gegenüberliegende Seitenwand (1b) des Magazins (1) in einer Distanz vom unteren Rand (1c) des auf der Lage (2a) aufsitzenden Magazins zu halten, die einer Lattendicke entspricht.

3. Vorrichtung nach Anspruch 2, dadurch gekennzeichnet, daß der Körper (9') vorzugsweise die Kolbenstange eines Druckzylinders (9') ist, die in einer Richtung quer zur Seitenwand (1a) des Magazins (1) beweglich ist.

4. Vorrichtung nach Anspruch 3, dadurch gekennzeichnet, daß der Teil (9') der lösbaren Halteeinrichtung (9), der an der Seitenkante der Latte (3) anliegt, mit wenigstens einem scharfen Vorsprung versehen ist.

5. Vorrichtung nach Anspruch 3, dadurch gekennzeichnet, daß der Druckzylinder (9) mit einem Klemmbalken verbunden ist, der sich parallel zur Seitenkante der Latte (3) erstreckt, um einen Haltedruck gegen jene Seitenkante auszuüben.

## Revendications

1. Procédé permettant de déposer des lattes (3) au moyen d'au moins un magasin d'alimentation (1) à l'intérieur duquel les lattes sont empilées l'une sur le dessus de l'autre et sont supportées transversalement, utilisé en liaison avec un appareillage d'empilage de bois de construction où les lattes (3) sont déposées en tant qu'éléments d'espacement sur chaque couche (2a) de planches avant que ne soit formée la couche suivante de planches (2a), et où la latte inférieure (3) de la pile se trouvant à l'intérieur du magasin est retenue à l'aide de moyens de retenue libérables (9) se trouvant à une distance donnée par rapport au bord inférieur (1c) du magasin (1), caractérisé en ce que l'on abaisse le magasin (1) de facon qu'il repose contre la couche de planches (2a) et on libère les moyens de retenue libérables (9), en permettant ainsi à la pile entière (3') de lattes de tomber sur la couche (2a), à la suite de quoi on actionne les moyens de retenue libérables (9) de facon qu'ils retiennent l'avant dernière latte (3) de la pile (3') à partir du bas, à une distance correspondant à une épaisseur de latte à partir dudit bord inférieur (lc) du magasin (1), avant que l'on ne soulève le magasin (1), en laissant la latte inférieure (3) à l'écart, dans la position correcte sur la couche de planches (2a).

2. Appareil à magasin d'alimentation destiné à être utilisé en liaison avec un appareillage d'empilage de bois de construction en vue de mettre en oeuvre le procédé défini dans la revendication 1, et comprenant au moins deux magasins d'alimentation (1) permettant de déposer des lattes (3) en tant qu'éléments d'espacement sur une couche (2a) de planches avant la formation de la couche suivante der planches, les lattes (3) qui sont empilées l'une sur le dessus de l'autre et sont supportées transversalement sous forme d'une pile (3') à l'intérieur du magasin (1) se trouvant retenues à l'aide de moyens de retenue libérables (9), caractérisé en ce que le magasin (1) est agencé de facon à être soulevé et abaissé et en ce que les moyens de retenue libérables comprennent un corps entraîné par une source d'énergie (9') et se trouvant à l'endroit de l'une des parois latérales (1a) du magasin (1) de facon à exercer un contact sous pression contre le bord latéral de la latte inférieure (3) de la pile, en vue de maintenir ladite latte contre le paroi latérale opposée (1b) du magasin (1), à une distance correspondant à une épaisseur de latte par rapport au bord inférieur (1c) du magasin qui repose sur la couche (2a).

3. Appareil selon la revendication 2, caractérisé en ce que le corps (9') constitue de préférence la tige de piston d'un vérin (9) qui est mobile suivant une direction perpendiculaire à la paroi latérale (1a) du magasin (1).

4. Appareil selon la revendication 3, caractérisé en ce que la partie (9') des moyens de retenue libérables (9) qui repose contre le bord latéral de la latte (3) est équipé d'au moins une saillie pointue.

5. Appareil selon la revendication 3, caractérisé en ce que le vérin (9) est relié à une barre de serrage d'étendant parallèlement au bord latéral de la latte (3) en vue d'exercer une pression de retenue contre ledit bord latéral.

Fig. 1

Fig. 2

Fig. 3

Fig. 4

Fig. 5

Fig. 6